# EUROPEAN PATENT SPECIFICATION

(11) **EP 2 055 676 B1**
(45) Date of publication and mention of the grant of the patent: **10.10.2012**
(21) Application number: 08168310.4
(22) Date of filing: 04.11.2008
(51) Int. Cl.: C01F 11/18, C01G 23/00

(54) **Barium carbonate particle powder, production method thereof, and production method of perovskite barium titanate**
Bariumcarbonat-Partikelpulver, Herstellungsverfahren dafür und Herstellungsverfahren für Perovskit-Barium-Titanat
Poudre de particules de carbonate de baryum, son procédé de production et procédé de production de titanate de baryum de pérovskite

(30) Priority: 05.11.2007 JP 2007287872
(43) Date of publication of application: 06.05.2009
(73) Proprietor: Nippon Chemical Industrial Co., Ltd., Koto-ku, Tokyo 136-8515 (JP)
(72) Inventor: Kikuchi, Tsutomu, Fukushima-ken (JP); Otaka, Nobuo, Fukushima-ken (JP); Sakuma, Akira, Fukushima-ken (JP); Agemoto, Kenji, Fukushima-ken (JP)
(74) Representative: Evans, Marc Nigel

(56) References cited:
- EP-A1- 1 785 397
- US-A1- 2002 141 139
- SA LV ET AL.: "Effects of reaction time and citric acid contents on the morphologies of BaCO3 via PVP-assisited method", MATERIALS RESEARCH BULLETIN, vol. 43, 9 June 2007 (2007-06-09), pages 1099-1105, XP002613913,
- SA LV ET AL.: "Synthesis of single-crystalline BaCO3 nanostructures with different morphologies via a simple PVP-assisted method", MATERIALS LETTERS, vol. 61, 30 January 2007 (2007-01-30), pages 4250-4254, XP002613914,
- SHU-HONG YU ET AL.: "Complex spherical BaCO3 superstructures self-assembled by a facile mineralization process under control of simple polyelectrolytes", CRYSTAL GROWTH & DESIGN, vol. 4, no. 1, 14 August 2003 (2003-08-14) , pages 33-37, XP002613915,
- SUNG-SOO RYU ET AL.: "Solid-state synthesis of nano-sized BaTiO3 powder with high tetragonality", JOURNAL OF MATERIALS SCIENCE, vol. 42, 5 May 2007 (2007-05-05), pages 7093-7099, XP002613916,

## Description

The present invention relates to a barium carbonate particle powder useful as a raw material for producing optical glass, electroceramics and the like, a production method of the barium carbonate particle powder, and a production method of perovskite barium titanate using the barium carbonate particle powder.

Barium carbonate is used as a raw material for producing barium titanate for use in ceramic capacitors, or applied to glass for lamps or optical glass, pigments or the like. In particular, multilayer capacitors are increasingly required to be miniaturized or to be made thinner, and to be highly functionalized, as the electronic devices are miniaturized. Accordingly, barium carbonate as the raw material is increasingly demanded to be finely pulverized. As the method for producing barium carbonate, for example, the following methods represented by the below presented reaction formulas (1), (2), (3) and the like have been proposed.

[Chemical formula 1] BaSO₄ + 2C → BaS + 2CO₂↑ BaS + CO₂ + H₂O → BaCO₃ + H₂S↑ (1)

[Chemical formula 2]

BaCl₂ +(NH₄)₂CO₃ → BaCO₃ + 2NH₄Cl (2)

[Chemical formula 3]

BaCl₂ + NH₄HCO₃ + NH₃ → BaCO₃ + 2NH₄Cl (3)

In the reactions represented by the above shown reaction formulas (1) to (3), hydrogen sulfide or ammonium chloride is by-produced, and these by-products tend to remain in the barium carbonate particle powder. The contents of these impurities are such that these impurities adversely affect the properties of the perovskite barium titanate for use in electronic materials, obtained by using the aforementioned barium carbonate.

A method has also been known in which barium hydroxide is reacted with carbon dioxide, as shown in the following reaction formula (4). In the barium carbonate obtained by this method, the by-product is restricted to water, and hence this method is an industrially advantageous method for the purpose of producing barium carbonate in high purity, and the particle shape of the barium carbonate thus obtained is acicular in most cases.
[Chemical formula 4]

Ba(OH)₂ +CO₂ → BaCO₃ +2H₂O (4)

For example, Patent Document 1 listed below proposes a method in which the reaction between barium hydroxide and carbon dioxide is conducted in the presence of a carboxylic acid; Patent Document 2 listed below proposes a method in which the reaction between barium hydroxide and carbon dioxide is conducted in the presence of a polycarboxylic acid; Patent Document 3 listed below proposes a method in which the reaction between barium hydroxide and carbon dioxide is conducted in the presence of ascorbic acid or pyrophosphoric acid; and Patent Document 4 listed below proposes a method in which the reaction between barium hydroxide and carbon dioxide is conducted under the conditions that a granular medium flows at a high speed.

The barium carbonate obtained in any of these Patent Documents 1 to 4 is acicular to have an aspect ratio of 5.0 or more.
Moreover, Patent Document 5 listed below discloses acicular barium carbonate having an aspect ratio of 3 to 20, wherein the barium carbonate is produced in the presence of citric acid by introducing a specified flow rate of carbon dioxide gas into an aqueous suspension of barium hydroxide falling within a specified concentration range of barium hydroxide while the aqueous suspension is being stirred. Patent Document 5 further discloses a method in which the acicular barium carbonate is ground with ceramic beads to yield granular barium carbonate having an aspect ratio of 2 or less, wherein the granular barium carbonate is composed of particles obtained by proportionally reducing the respective dimensions of the acicular barium carbonate.
Patent Document 1: Japanese Patent Laid-Open No. 07-25611
Patent Document 2: Japanese Patent Laid-Open No. 2000-103617
Patent Document 3: Japanese Patent Laid-Open No. 2000-185914
Patent Document 4: Japanese Patent Laid-Open No. 2004-59372
Patent Document 5: Japanese Patent Laid-Open No. 2007-176789

Conventional acicular barium carbonate is disadvantageously unsatisfactory in dispersibility due to the particle shape thereof, and hence, suffers from a problem that a uniform mixture is hardly obtainable when mixed with other ceramic raw materials. Consequently, for example, perovskite barium titanate obtained by mixing conventional acicular barium carbonate and titanium dioxide and by calcining the obtained mixture suffers from a problem involving unreacted barium carbonate and unreacted titanium dioxide remaining as unreacted raw materials in the perovskite barium titanate, and additionally because an excessive grinding treatment is required in order to obtain a uniform mixture, the obtained perovskite barium titanate tends to be low in purity due to the incorporation of the impurities produced through the mixing-grinding treatment. Accordingly, development of barium carbonate smaller in aspect ratio and better in dispersibility than conventional barium carbonate has been desired.

Materials Research Bulletin, Vol. 43, (2008), pages 1099-1105 describes the synthesis of barium carbonate with different morphologies.

Materials Letters, Vol. 61, (2007), pages 4250-4254 describes the synthesis of single-crystalline barium carbonate nanostructures with different morphologies.

Crystal Growth & Design vol 4, no.1, (2004), pages 33-37 describes a facile mineralization process for the self-assembly of spherical barium carbonate superstructures.

Accordingly, an object of the present invention is to provide a rod-like or granular barium carbonate particle powder having two or more constricted portions on the particle surface, excellent in dispersibility and small in aspect ratio, a production method of the barium carbonate particle powder, and a production method of perovskite barium titanate using the barium carbonate particle powder.

Under such circumstances, the present inventors conducted a detailed investigation on the crystal growth conditions of barium carbonate, and consequently, discovered that by heat treating, under specified conditions, an aqueous slurry containing acicular barium carbonate that is fine and large in aspect ratio, there is obtained a barium carbonate particle powder suitable as a ceramic raw material or the like wherein the particle powder has a characteristic rod-like particle shape which is small in aspect ratio and has two or more constricted portions on the particle surface.

The present inventors also discovered that application of a grinding treatment to the rod-like barium carbonate particles each having two or more constricted portions results in easy scission at the constricted portion (s) to yield a powder having a granular particle shape smaller in aspect ratio.

Further, the present inventors discovered that when perovskite barium titanate is produced by using these barium carbonate particle powders as a barium source, neither unreacted barium carbonate nor unreacted titanium dioxide remains as an unreacted raw material, the incorporation of impurities due to the mixing-grinding treatment is suppressed, and high-purity perovskite barium titanate is obtained by an industrially advantageous method, and thus the present inventors reached the completion of the present invention.

Specifically, a first aspect provided by the present invention is a rod-like barium carbonate particle powder, characterized in that the powder includes rod-like particles each having two or more constricted portions on the particle surface and the aspect ratio of the rod-like particles is 1.5 to 4.5.

A second aspect provided by the present invention is a granular barium carbonate particle powder, characterized in that the powder includes granular particles having no constricted portions on the particle surface and granular particles each having two or more constricted portions on the particle surface and the aspect ratio of the granular particles is 1.3 to 3.0.

A third aspect provided by the present invention is a production method of the rod-like barium carbonate particle powder according to the first aspect, characterized by including a step of heat treating at 50°C or higher an aqueous slurry containing an acicular barium carbonate particle powder obtained from a reaction in water medium between barium hydroxide and a carbonic acid source selected from carbon dioxide and a soluble carbonate in the presence of at least one or more particle growth suppressors selected from the group consisting of a polyhydric alcohol, pyrophosphoric acid, ascorbic acid, a carboxylic acid, a carboxylic acid salt, a polycarboxylic acid and a polycarboxylic acid salt.

A fourth aspect provided by the present invention is a production method of the granular barium carbonate particle powder according to the second aspect, characterized by including a step of obtaining a rod-like barium carbonate particle powder by heat treating at 50°C or higher an aqueous slurry containing an acicular barium carbonate particle powder obtained from a reaction in water medium between barium hydroxide and a carbonic acid source selected from carbon dioxide and a soluble carbonate in the presence of at least one or more particle growth suppressors selected from the group consisting of a polyhydric alcohol, pyrophosphoric acid, ascorbic acid, a carboxylic acid, a carboxylic acid salt, a polycarboxylic acid and a polycarboxylic acid salt, and a step of applying a grinding treatment to the rod-like barium carbonate particle powder.

A fifth aspect provided by the present invention is a production method of perovskite barium titanate, characterized in that the barium carbonate particle powder according to the first or second aspect and titanium dioxide are mixed together, and the obtained mixture is calcined.

Moreover, another aspect of the present invention is a of the barium carbonate particle powder according to the first or second aspect as a barium source for the production of perovskite barium titanate.

The rod-like or granular barium carbonate particle powder of the present invention is a barium carbonate particle powder that is smaller in aspect ratio as compared to conventional acicular barium carbonate particle powders, additionally contains particles having a novel particle shape which has two or more constricted portions on the particle surface, and has a reasonable dispersibility.

The unreacted raw materials remaining in the solid phase reaction and the incorporation of the impurities due to the mixing treatment are suppressed by using the barium carbonate particle powder as the barium source, and thus high-purity perovskite barium titanate can be produced.

According to the production method of the present invention, rod-like or granular barium carbonate can profitably be produced industrially.

Embodiments of the invention are described in detail hereunder, by way of example only, with reference to the accompanying drawings, in which:-
FIG. 1 is a schematic diagram illustrating an example of a rod-like barium carbonate particle, in the present invention, having constricted portions;
FIG. 2 is a SEM photograph (magnification: 100000) of a barium carbonate particle powder sample obtained in Example 1;
FIG. 3 is a SEM photograph (magnification: 100000) of a barium carbonate particle powder sample obtained in Example 3;
FIG. 4 is a SEM photograph (magnification: 100000) of a barium carbonate particle powder sample obtained in Example 9; and
FIG. 5 is a SEM photograph (magnification: 100000) of a barium carbonate particle powder sample obtained in Comparative Example 1.

Hereinafter, the present invention is described on the basis of preferred embodiments.

### (Rod-like barium carbonate particle powder according to the first aspect)

The rod-like barium carbonate particle powder according to the first aspect of the present invention is characterized in that the powder includes rod-like particles each having one or two or more constricted portions on the particle surface and the aspect ratio of the rod-like particles is 1.5 to 4.5.

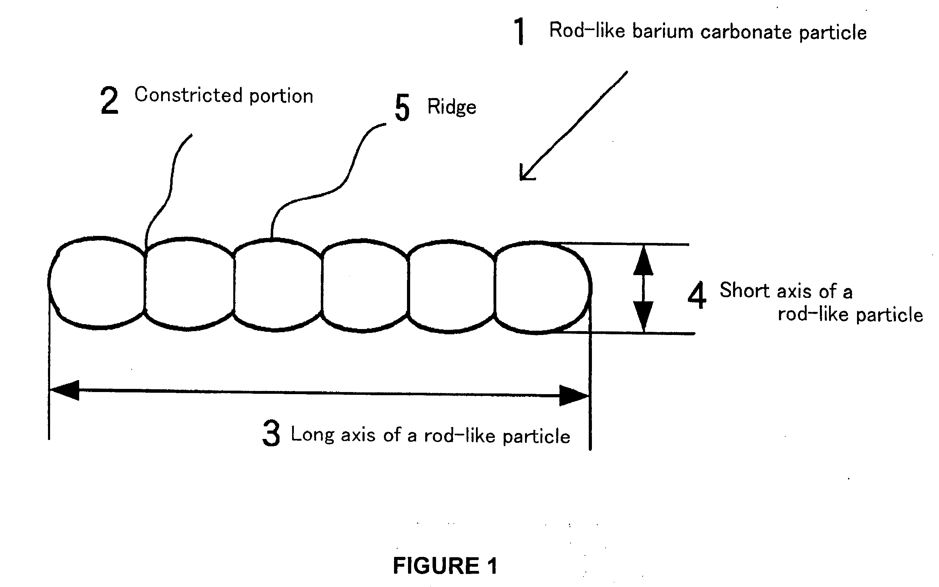

FIG. 1 is a schematic diagram illustrating an example of a rod-like barium carbonate particle, in the present invention, having constricted portions, wherein reference numeral 1 denotes a rod-like barium carbonate particle, reference numeral 2 denotes a constricted portion, reference numeral 3 denotes the long axis of the rod-like particle, reference numeral 4 denotes the short axis of the rod-like particle and reference numeral 5 denotes a ridge portion.

The constricted portions 2 are formed by heat treating an aqueous slurry containing an acicular barium carbonate particle powder, and are the portions thinner as compared to the other portions in the rod-like particle. In FIG. 1, the constricted portions 2 are disposed in the direction perpendicular to or inclined from the long axis 3 of the rod-like particle, so as to be extended in a direction parallel to or inclined from the direction of the short axis 4. The portions of the ridges 5 are located between the constricted portions 2, and the constricted portions 2 are formed so as to be recessed from the particle surface in the short axis direction of the rod-like particle to form troughs.

In the present invention, the constricted portions are identified on the particle surface when the barium carbonate particle powder is observed with a scanning electron microscope at a magnification of up to 100000. The constricted portions are present in a proportion of one or more portions and preferably 5 to 25 portions in terms of the number per a length of 1 µm in the long axis direction of the barium carbonate particle. In the present invention, unless otherwise specified, the number of the constricted portions is the value (unit: portions/µm) represented in terms of the number of the constricted portions per a length of 1 µm in the long axis direction, derived as follows: 200 particles are randomly sampled from a scanning electron microscope photograph obtained at a magnification of 100000, the long axis length and the number of constricted portions of each of the particles are measured; and the sum of the long axis lengths and the sum of the number of the constricted portions of the individual particles are obtained; and the desired value is derived with the calculation formula presented below.

Number of constricted portions (portions/µm) = Sum (portions) of number of constricted portions/sum of the long axis lengths (µm)

In the present invention, the aspect ratio is derived from a scanning electron microscopic observation. For each of the particles, the ratio (A/B) of the long axis length (A) to the short axis length (B) is derived, and the average value over the measured values of the 200 particles is presented.

In the present invention, the aspect ratio of the rod-like barium carbonate particle powder is 1.5 to 4.5 and preferably 1.5 to 3; when the aspect ratio falls within the above-described ranges, in particular, the fluidity and the dispersibility of the particle powder are satisfactory, and hence desirably a uniform mixture with titanium oxide can be easily prepared when the particle powder is used as the raw material for barium titanate.

In the rod-like barium carbonate particle powder of the present invention, desirably the long axis length as obtained from the scanning electron microscopic observation is 0.1 to 0.5 µm and preferably 0.1 to 0.3 µm.
Additionally, in the rod-like barium carbonate particle powder of the present invention, desirably the short axis length as obtained from the scanning electron microscopic observation is 0.03 to 0.10 µm and preferably 0.04 to 0.06 µm.

The rod-like barium carbonate particle powder of the present invention preferably has a BET specific surface area of 15 m²/g or more, preferably 20 m²/g or more and particularly preferably 20 to 35 m²/g as well as the above-described properties.

The rod-like barium carbonate particle powder of the present invention may contain barium carbonate particles other than the rod-like barium carbonate particle; as the other barium carbonate particles, there may be contained particles having a below-described, constricted portion-free, acicular, rod-like, rice grain-like, oval, spherical or irregular particle shape, in a content of 100% by particles or less preferably 50% by particles or less and particularly preferably 10% by particles or less.

### (Granular barium carbonate particle powder according to the second aspect)

The granular barium carbonate particle powder according to the second aspect of the present invention is characterized in that the powder includes granular particles having no constricted portions on the particle surface and granular particles each having two or more constricted portions on the particle surface, and the aspect ratio of the powder is 1.3 to 3.0 and preferably 1.3 to 2.5. Basically, the granular barium carbonate particle powder according to the second aspect is obtained by applying a grinding treatment to the rod-like barium carbonate particle powder according to the first aspect, and is a granular barium carbonate particle powder smaller in aspect ratio than the rod-like barium carbonate particle powder according to the first aspect.

In the present invention, the above-described constricted portion-free granular particles mean particles having particle shapes other than the particle shapes of the above-described constricted portion-containing granular particles; examples of the constricted portion-free granular particles include particles having an acicular, rod-like, rice grain-like, oval, spherical or irregular particle shape.

In the granular barium carbonate particle powder of the present invention, the content ratio between the constricted portion-free granular particle (X) and the constricted portion-containing granular particle (Y) is, in terms of number of particles, X:Y = 1:5 to 10:1, and preferably 1:1 to 10: 1. In the present invention, the content ratio between the individual particles is a value derived from the scanning electron microscope (SEM) observation for 200 randomly sampled particles.

In the granular barium carbonate particle powder according to the second aspect of the present invention, the long axis length is 0.05 to 0.20 µm and preferably 0.10 to 0.15 µm. The long axis length of the constricted portion-free granular particle (X) is 0.1 µm or less and preferably 0.05 to 0.08 µm.

The long axis length of the constricted portion-containing granular particle (Y) is 0.1 to 0.3 µm and preferably 0.1 to 0.2 µm. Desirably the short axis length of the constricted portion-containing granular particle is 0.02 to 0.1 µm and preferably 0.02 to 0.07 µm.

The granular barium carbonate particle powder according to the second aspect of the present invention preferably has a BET specific surface area of 15 m²/g or more, preferably 20 m²/g or more and particularly preferably 20 to 50 m²/g as well as the above-described properties.

### (Production method of the barium carbonate particle powder)

Next, the production method of the barium carbonate particle powder having the above-described properties of the present invention.
In the production method of the barium carbonate particle powder of the present invention, the rod-like barium carbonate particle powder according to the first aspect of the present invention can be obtained by heat treating under specified conditions an aqueous slurry containing an acicular barium carbonate particle powder described below, and further, the granular barium carbonate particle powder according to the second aspect can be obtained by grinding treatment of the rod-like barium carbonate particle powder according to the first aspect.

Basically, the rod-like barium carbonate particle powder according to the first aspect of the present invention is obtained by heat treating an aqueous slurry containing an acicular barium carbonate particle powder described below at 50°C or higher.
The acicular barium carbonate particle powder used as the raw material in the present invention has desirably an aspect ratio of 4.5 or more, preferably 4.5 to 10 and furthermore preferably 4.5 to 8.0 from the fact that such an aspect ratio enables reduction of the heat treatment time.

In the acicular barium carbonate particle powder, particularly desirably the long axis length as obtained from the scanning electron microscopic observation is 0.1 to 1.5 µm and preferably 0.1 to 1.0 µm from the fact that such a long axis length results in production of a fine barium carbonate particle powder.

Another preferable physical property of the acicular barium carbonate particle powder is a BET specific surface area of 25 m²/g or more, preferably 30 m²/g or more and particularly preferably 35 to 40 m²/g. With such BET specific surface areas, particularly desirably, the specific surface area after the heat treatment can be maintained to be 15 m²/g or more, preferably 20 m²/g or more and particularly preferably 20 to 35 m²/g.

The acicular barium carbonate particle powder is a product obtained from a reaction in water medium between barium hydroxide and a carbonic acid source selected from carbon dioxide and a soluble carbonate in the presence of a particle growth suppressor described below.The use of such a product enables production of a high-purity barium carbonate particle powder.

The production method of the acicular barium carbonate particle powder is described in more detail.
The reaction between barium hydroxide and the carbonic acid source is conducted by adding the carbonic acid source to an aqueous solution in which barium hydroxide is dissolved.

The usable barium hydroxide may be, without any particular limitation, any industrially available product, and may also be a hydrate or an anhydride. The concentration of the aqueous solution in which barium hydroxide is dissolved may fall, without any particular limitation, within the solubility of the barium hydroxide; however, it is advantageous to use preferably a nearly saturated aqueous solution for the purpose of enhancing the production efficiency; for example, in an aqueous solution at 20°C, the saturation solubility is 4% by weight in terms of the anhydride (Ba(OH)₂), no undissolved barium hydroxide is found, the reaction with carbon dioxide as a subsequent step proceeds uniformly and uniform particles tend to be obtained, and hence the use of a nearly saturated solution of barium hydroxide is preferable.

Carbon dioxide is added in the form of gas to the aqueous solution in which barium hydroxide is dissolved. The soluble carbonate used in the present invention is, in most cases, used as an aqueous solution in which the soluble carbonate is dissolved in water. Examples of the soluble carbonate used in the present invention include ammonium hydrogen carbonate, sodium carbonate and ammonium carbonate, and these may be used each alone or in combinations of two or more thereof. The concentration of the aqueous solution in which the soluble carbonate is dissolved may fall, without any particular limitation, within the solubility of the soluble carbonate.

In the present invention, as the above-described carbonic acid source, carbon dioxide is particularly preferable from the fact that the purity of the produced barium carbonate is high.
The addition amount of the carbonic acid source to the aqueous solution in which barium hydroxide is dissolved is 0.2 to 1, in terms of the molar ratio (Ba/CO₃) between the Ba atom in barium hydroxide and the CO₃ molecule in the carbonic acid source. This is because when the molar ratio (Ba/CO₃) is less than 0.2, unpreferably the addition amount of the carbonate is large to cause cost increase. On the other hand, this is because when the addition amount exceeds 1, the amount of the unreacted barium hydroxide is large to degrade the barium yield. Usually, for the purpose of enhancing the reaction efficiency, the reaction is conducted with excess of CO₃, and the molar ratio (Ba/CO₃) of 0.3 to 0.8 is preferable from the viewpoints of the reaction efficiency and the economic efficiency.

The addition of the carbonic acid source is usually conducted while the aqueous solution in which barium hydroxide is dissolved is being stirred, and although the addition rate is not particularly restricted, the addition at a constant rate is particularly preferable from the fact that the product stable in quality is obtained.

The reaction temperature is varied depending on the soluble barium salt, the soluble carbonate and carbon dioxide, and is not particularly limited; however it has been verified that the lower is the reaction temperature, the smaller is the particle size of the obtained barium carbonate. Thus, desirably, the soluble barium salt and the soluble carbonate and/or carbon dioxide are reacted with each other at 30°C or lower.

The reaction time is 0.01 hour or more, preferably 0.01 to 24 hours and particularly preferably 0.01 to 10 hours.
As mentioned above, the reaction is conducted in the presence of a particle growth suppressor. The particle growth can thus be suppressed to produce an acicular barium carbonate particle powder having a further higher specific surface area; by using as a raw material the acicular barium carbonate particle powder having a higher specific surface area, there can be obtained the barium carbonate particle powder of the present invention, having a further higher specific surface area.

As the particle growth suppressor used in the present invention, there is used at least one selected from the group consisting of a polyhydric alcohol, pyrophosphoric acid, ascorbic acid, a carboxylic acid, a carboxylic acid salt, a polycarboxylic acid and a polycarboxylic acid salt.

Examples of the polyhydric alcohol used in the present invention include alcohols having two or more OH groups, such as ethylene glycol, propylene glycol, glycerin, alcohol glycerin, erythritol, adonitol, mannitol and sorbitol.

The carboxylic acid or carboxylic acid salt used in the present invention may be, without any particular limitation on the type, any carboxylic acid or any carboxylic acid salt; examples of such acids and salts include citric acid, carboxymethyl cellulose, oxalic acid, malonic acid, succinic acid, malic acid, maleic acid, tartaric acid, adipic acid, acrylic acid, polycarboxylic acid, polyacrylic acid, and the sodium salts and ammonium salts of these acids.

The polycarboxylic acid or polycarboxylic acid salt used in the present invention may be, without any particular limitation on the type, any polycarboxylic acid or any polycarboxylic acid salt; examples of such acids and salts include polycarboxylic acid, sodium polycarboxylate, ammonium polycarboxylate, polyacrylic acid, sodium polyacrylate and ammonium polyacrylate.

In the present invention, preferably used among these particle growth suppressors are carboxylic acids, carboxylic acid salts, polycarboxylic acids and polycarboxylic acid salts owing to the high particle growth suppression effects.
Such a particle growth suppressor is only required to be always present in the above-described reaction system at the time of the reaction between barium hydroxide and the carbonic acid source without any particular constraint imposed on the time of the addition of the particle growth suppressor; however, for the purpose of obtaining a barium carbonate particle powder having a larger specific surface area, it is preferable to add beforehand to the barium hydroxide-containing aqueous solution or to add immediately after the completion of the addition of the carbonic acid source. The addition method is not particularly limited; when the particle growth suppressor is added after the completion of the addition of the carbonic acid source, an aqueous solution containing the particle growth suppressor in a content of approximately 0.1 to 10% by weight is prepared beforehand, and then this solution may be added to the reaction system.

The addition amount of the particle growth suppressor is 0.1 to 10% by weight and preferably 1 to 5% by weight in relation to the produced barium carbonate. This is because when the addition amount is less than 0.1% by weight, the particle growth suppression effect can be hardly attained, and on the other hand, even when the particle growth suppressor is added in excess of 10% by weight, no further particle growth suppression effect can be attained and such addition tends to be uneconomical. Although the added particle growth suppressor remains in barium carbonate, the acicular barium carbonate particle powder can be subjected as it is to the below-described heat treatment without particularly removing the particle growth suppressor.

In the production of such an acicular barium carbonate particle powder, the reaction may be conducted in a batch wise or continuous manner.

After the completion of the reaction, the solid-liquid separation is conducted in a conventional manner, and operations such as washing, drying, further disintegration and classification may be conducted where necessary, to yield the acicular barium carbonate particle powder used in the present invention; alternatively, the reaction solution after the completion of the reaction, containing the acicular barium carbonate can be used as it is as the below-described aqueous slurry containing the acicular barium carbonate particle powder.

The obtained acicular barium carbonate particle powder has an aspect ratio of 4.5 or more, preferably 4.5 to 10 and more preferably 4.5 to 8.0, a long axis length of 0.1 to 1.5 µm and preferably 0.1 to 1.0 µm, a short axis length of 0.02 to 0.08 µm and preferably 0.02 to 0. 05 µm, and further, a BET specific surface area of 25 m²/g or more, preferably 30 m²/g or more and particularly preferably 35 to 40 m²/g.

The production method of the rod-like barium carbonate particle powder of the present invention heat treats at 50°C or higher the aqueous slurry containing the acicular barium carbonate particle powder.
Although the concentration of the aqueous slurry containing the acicular barium carbonate particle powder is not particularly limited, when the concentration is 4 to 95% by weight and preferably 4 to 20% by weight, particularly preferably the viscosity of the slurry is low to facilitate the handling of the slurry.

Next, in the present invention, the slurry containing the acicular barium carbonate particle powder is subjected to a heat treatment at 50°C or higher.
By conducting this heat treatment, the aspect ratio of the acicular barium carbonate particle powder can be decreased to be 4.5 or less, and can also produce constricted portions on the particle surface. It is to be noted that when the heat treatment temperature is lower than 50°C, the barium carbonate particle powder of the present invention cannot be obtained even with the longest possible time of heat treatment. The heat treatment temperature is preferably 80°C or higher; the higher is the heat treatment temperature, in the shorter time the aspect ratio is decreased and further the constricted portions are formed; when the heat treatment is conducted at 100°C or higher, an autoclave or the like is preferably used. In the present invention, particularly desirably the heat treatment temperature is 50 to 180°C and preferably 110°C to 150°C from the fact that the control of the aspect ratio is easy and the aging time can be short.

Within the above-described temperature range, the longer is the heat treatment time, the smaller is the aspect ratio and the more definite are the constricted portions. In the present invention, the heat treatment time is varied depending on the heat treatment temperature; the heat treatment time is 0.5 hour or more in most cases; and particularly preferable is the heat treatment time, inclusive of the time elapsed in the course of the increase of the temperature, of 0.5 to 48 hours from the fact that the aspect ratio is decreased, and at the same time the number of the constrictions is increased.

After the completion of the heat treatment, the solid-liquid separation is conducted in a conventional manner, and operations such as washing, drying and further disintegration are conducted where necessary, and thus the rod-like barium carbonate particle powder according to the first aspect of the present invention can be obtained.
The preferred physical properties of the obtained rod-like barium carbonate particle powder are such that the number of the constricted portions on the particle surface is 1 or more and preferably 5 to 25, the aspect ratio is 1.5 to 4.5 and preferably 1.5 to 3.0. Further, particularly desirably, the long axis length is 0.1 to 0.5 µm and preferably 0.1 to 0.3 µm, the BET specific surface area is 15 m²/g or more, preferably 20 m²/g or more and particularly preferably 20 to 35 m²/g.

The rod-like barium carbonate particle powder according to the first aspect of the present invention has one or two or more constricted portions on the particle surface, the particles easily undergo scission at the constricted portions by implementing the below-descried grinding step and consequently a barium carbonate particle powder further smaller in aspect ratio can be obtained.

The barium carbonate particle powder according to the second aspect of the present invention can be obtained by further providing a grinding step in the production method of the barium carbonate particle powder according to the first aspect.
The grinding method is implemented by means of a mechanical device exerting a strong shear force and the grinding can be conducted by either a wet method or a dry method. The wet method may be implemented with a bead mill or a ball mill. The dry method may be implemented with a jet mill or a bead mill. The grinding may be conducted under the optimal grinding or other conditions appropriately selected according to the grinding apparatus to be used.

Application of the above-described grinding treatment yields a granular barium carbonate particle powder which contains the granular particles having no constricted portions on the particle surface and the granular particles having two or more constricted portions on the particle surface. As for the granular barium carbonate particle powder, particularly desirably the preferred properties are such that the aspect ratio is 1.3 to 3.0 and preferably 1.3 to 2.5, and the BET specific surface area is 15 m²/g or more, preferably 20 m²/g or more and particularly preferably 20 to 50 m²/g.

The rod-like or granular barium carbonate particle powder according to the present invention can be suitably used as the barium source in the raw materials for ceramics and optical glass, in the raw materials for electronic materials such as superconductive materials, and in particular, the raw materials for perovskite barium titanate. It is to be noted that in the present invention, the term, perovskite barium titanate, includes, in addition to barium titanate, the substances obtained by partially substituting the titanium atoms with zirconium atoms, the substances obtained by partially substituting the barium atoms with the atoms of one or two or more elements selected from calcium, strontium and lead, and the below-described substances obtained by including auxiliary component elements.

Next, the production method of the perovskite barium titanate according to the present invention is described. In the concerned method, the above-described rod-like or granular barium carbonate particle powder of the present invention and titanium dioxide are mixed together to be calcined. As the barium carbonate particles are to be mixed with titanium dioxide in the present invention, a dried product or a slurry before the drying/grinding treatment is used.

The titanium dioxide used in the present invention is not particularly limited with respect to the type and the manufacturing history; however, preferable is titanium dioxide having a BET specific surface area of 5 m²/g or more and preferably 10 to 100 m²/g and an average particle size obtained by a laser diffraction method being 1 µm or less and preferably falling within a range from 0. 1 to 0.5 µm. As such titanium dioxide, it is preferable to use a high-purity product for the purpose of obtaining high-purity perovskite barium titanate.

The mixing amount of titanium dioxide is usually 0.95 to 1.05 and preferably 0.99 to 1. 01 in terms of the molar ratio Ti/Ba in relation to the Ba in the barium carbonate particle powder.
The method for mixing the barium carbonate particle powder and titanium dioxide may be either a wet method or a dry method; however, the mixing is preferably conducted in a conventional manner by using a wet mixer such as a bead mill or a ball mill because of the easiness in uniform mixing.

The mixture obtained by mixing the rod-like or granular barium carbonate particle powder and titanium dioxide is ground if desired, and calcined. When the mixture contains water due to the wet mixing or other reasons, the mixture is dried to remove water, and if desired, thereafter ground. The drying conditions are not particularly limited; examples of the drying method include a method in which the mixture is allowed to stand to be dried naturally, and a method in which the mixture is subjected to a drying treatment at 50 to 200°C.

The mixture obtained above is calcined. The calcination temperature is usually 700 to 1200°C and preferably 800 to 1000°C. The reasons for this are such that when the calcination temperature is lower than 700°C, unpractically the reaction takes time to degrade the productivity, and on the other hand, when the calcination temperature exceeds 1200°C, the produced barium titanate crystal particles tend to be non-uniform.

In the present invention, the mixture is calcined usually at 700 to 1200°C and preferably at 800 to 1000°C, thereafter the calcined product is ground, granulated if desired, and thereafter may be calcined usually at 700 to 1200°C and preferably at 800 to 1000°C; for the purpose of making uniform the powder properties, this calcination may be such that the once calcined mixture is ground and the ground product is calcined again. The calcination atmosphere is not particularly limited; the calcination may be conducted in the air, in an oxygen atmosphere or in an inert gas atmosphere; when the reaction is conducted while the generated carbon dioxide gas is being removed during the calcination as needed, perovskite barium titanate having a high crystallinity can be obtained.

The perovskite barium titanate after calcination is, for example, washed with an acid solution where necessary, washed with water and dried, and thus can be converted into a finished product. As the drying method, a conventional method may be used, without any particular limitation; however, examples of the drying method include a method using a spray dryer.

The perovskite barium titanate obtained in the present invention is perovskite barium titanate that has an average particle size of 0.05 to 2 µm as obtained from an electron microscopic observation, is extremely high in purity and suitable for use in electronic components.

A titanium-based perovskite ceramic raw material powder that contains the oxide(s) of the auxiliary component element(s) can be obtained when mixed with compounds containing at least one element selected from rare-earth elements such as Sc, Y, La, Ce, Pr, Nd, Pm, Sm, Eu, Gd, Tb, Dy, Ho, Er, Tm, Yb and Lu, and Ba, Li, Bi, Zn, Mn, Al, Si, Ca, Sr, Co, V, Nb, Ni, Cr, Fe and Mg, before calcination, namely, at the time of mixing with titanium dioxide or after calcination where necessary, and thereafter the calcination is conducted. The combinations and the addition amounts of these auxiliary component element-containing compounds can be optionally set in conformity with the dielectric properties required for the produced ceramic raw material powders. Specifically, the addition amount of the auxiliary component element-containing compound is, in relation to 100 parts by weight of barium titanate, usually 0.1 to 5 parts by weight in terms of the element(s) in the auxiliary component element-containing compound.

The perovskite barium titanate obtained in the present invention can be used as the raw materials for production of multilayer capacitors. For example, first, the above-described perovskite barium titanate and heretofore known ingredients such as an additive, an organic binder, a plasticizer and a dispersant are mixed together and dispersed to be converted into a slurry, and the solid material in the slurry is molded to yield a ceramic sheet. Next, a conductive paste for forming an internal electrode is printed on one side of the ceramic sheet and dried. Thereafter, two or more ceramic sheets thus prepared are laminated, and then the laminated ceramic sheets are press-bonded to each other in the thickness direction to form a laminated body. Further, the laminated body is subjected to a heat treatment for a debindering treatment, and then calcined to yield a calcined body. Thereafter, this sintered body is coated with pastes such as an In-Ga paste, a Ni paste, a Ag paste, a nickel alloy paste, a Cu paste and a copper alloy paste, the pastes are baked onto the sintered body, and thus a multilayer capacitor can be obtained.

The perovskite barium titanate obtained in the present invention is mixed, for example, with a resin such as epoxy resin, polyester resin, or polyimide resin, and thus can be suitably used in the materials for the components such as printed wiring boards and multilayer printed wiring boards, as the materials such as resin sheets, resin films and adhesives. Additionally, the perovskite barium titanate can be suitably used as the materials such as: dielectric materials for EL elements; common materials for suppressing the contraction difference between internal electrodes and dielectric layers; raw materials for base materials for electrode ceramics wiring boards and glass ceramics wiring boards and raw materials for circuit peripheral materials; catalysts used for exhaust gas removal and used at the time of reactions of chemical synthesis and other reactions; and materials for modifying the printing toner surface to impart antistatic effects and cleaning effects to the toners.

### Examples

Hereinafter, embodiments of the present invention are described specifically with reference to Examples. It is to be understood, however, that the present invention is not limited to these Examples.

### Examples 1 to 5

In each of Examples 1 to 5, in a reaction vessel, 50.0 g of barium hydroxide octahydrate, 0.156 g (converted to 100% purity) of commercially obtained citric acid and 1500 g of water were placed, and barium hydroxide and citric acid were dissolved. While the reaction solution thus obtained was being stirred at 10000 rpm, 0.0056 g of carbon dioxide gas was made to blow into the reaction solution at a flow rate of 0.0112 g/min to allow the reaction to proceed, and thus acicular barium carbonate was precipitated. This reaction was conducted at a reaction temperature of 20°C and with a reaction time of 30 seconds.

Successively, the 4% by weight slurry after the completion of the reaction was placed in a sealed vessel (autoclave), and was subjected to a heat treatment under stirring. The heat treatment temperature and the heat treatment time are as described in Table 1.
After the heat treatment, the slurry was subjected to a solid-liquid separation in a conventional manner. The solid material thus obtained was dried at 120°C for 6 hours, and then disintegrated to yield barium carbonate. The thus obtained barium carbonate was used as a rod-like barium carbonate particle powder sample.

### Examples 6 and 7

In each of Examples 6 and 7, a rod-like barium carbonate particle powder sample was obtained under the same conditions as in Examples 1 to 5 except that the reaction vessel was changed from the sealed vessel (autoclave) to an open vessel (flask) and the heat treatment was conducted at the temperature and the time described in Table 1.

### Example 8

A rod-like barium carbonate particle powder sample was obtained in the same manner as in Example 1 except that acicular barium carbonate was precipitated in the same manner as in Example 1, and thereafter, in the step of conducting the heat treatment, the heat treatment was conducted with the slurry concentrated to 12% by weight.

### Example 9

Here is presented an Example in which a rod-like barium carbonate particle powder was subjected to a grinding treatment.

The rod-like barium carbonate particle powder was obtained in the same manner as in Example 1, and thereafter by using a bead mill, a wet grinding treatment was conducted wherein zirconia beads of 0.4 mm in diameter were filled in the bead mill so as for the filling factor to be 85%, and the zirconia beads were stirred at a circumferential velocity of 10 m/s.

Next, the slurry after the wet grinding treatment was dried at 120°C for 6 hours to yield a granular barium carbonate particle powder sample. From the scanning electron microscope (SEM) photograph of the obtained granular barium carbonate particle powder, 200 particles were sampled, and the content ratio between the constricted portion-free granular particle (X) and the constricted portion-containing granular particle (Y) was found to be X:Y = 3:1 in terms of number of particles.

### Comparative Example 1

An acicular barium carbonate particle powder sample was obtained in the same manner as in Example 1 except that no heat treatment was conducted.

### Comparative Example 2

A barium carbonate particle powder sample was obtained in the same manner as in Example 7 except that the heating temperature was set at 40°C and the heating time was set at 7 days.

**[Table 1]**

| | HEAT TREATMENT CONDITIONS | | |
|---|---|---|---|
| | SLURRY CONCENTRATION (% BY WEIGHT) | HEATING TEMPERATURE (°C) | HEATING TIME (Hrs) |
| EXAMPLE 1 | 4 | 150 | 2 |
| EXAMPLE 2 | 4 | 150 | 5 |
| EXAMPLE 3 | 4 | 150 | 72 |
| EXAMPLE 4 | 4 | 110 | 4 |
| EXAMPLE 5 | 4 | 110 | 12 |
| EXAMPLE 6 | 4 | 90 | 24 |
| EXAMPLE 7 | 4 | 90 | 48 |
| EXAMPLE 8 | 12 | 150 | 2 |
| EXAMPLE 9 | 4 | 150 | 2 |
| COMPARATIVE EXAMPLE 1 | 4 | - | - |
| COMPARATIVE EXAMPLE 2 | 4 | 40 | 7 days |

### <Evaluation of the physical properties of the barium carbonate particle powders>

Each of the barium carbonate particle powder samples obtained in Examples 1 to 9 and Comparative Examples 1 and 2 was subjected to the measurements of the BET specific surface area, the aspect ratio, the long axis length and the number of the constricted portions. The results thus obtained are shown in Table 2.

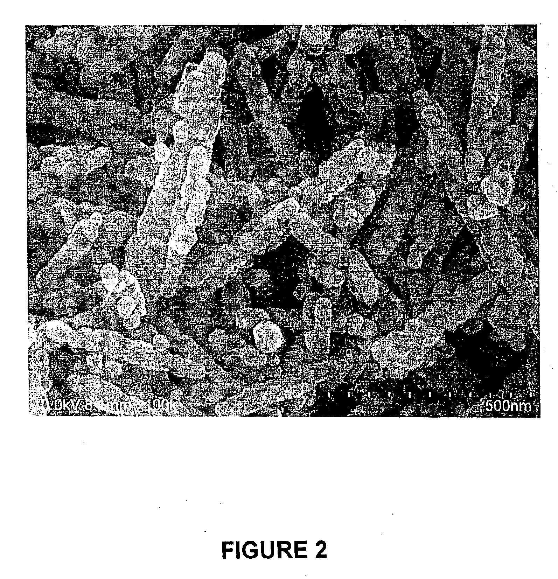

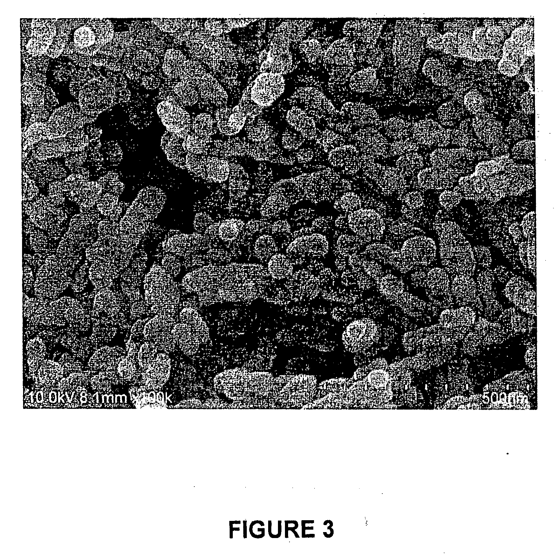

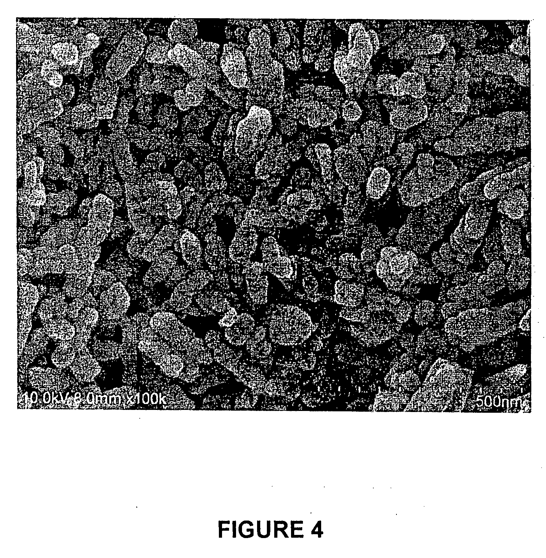

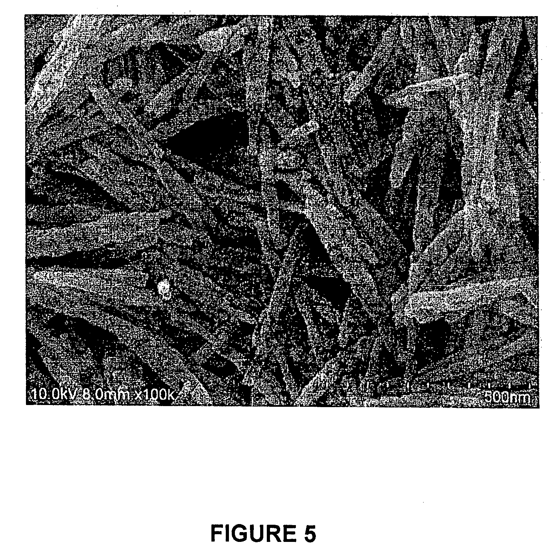

FIGS. 2 to 5 show the scanning electron microscope photographs (SEM photographs, magnification: 100000) of the barium carbonate particle powders obtained in Example 1 (FIG. 2), Example 3 (FIG. 3), Example 8 (FIG. 4) and Comparative Example 1 (FIG. 5).

In the SEM photographs, the barium carbonate particle powders of Example 1, Example 3 and Example 8, respectively, shown in FIGS. 2 to 4, are observed to have the constricted portions which are extended in the direction perpendicular to or inclined from the long axis direction of the rod-like particle, and are formed to be recessed as the troughs between the ridges. The barium carbonate particle powder of Comparative Example 1 shown in FIG. 5 is composed of acicular particles, and raised portions due to the small granular particles attached to the surface of the acicular particles are identified, but these acicular particles are different from the constricted portion-containing rod-like particles of the present invention.

It is to be noted that the aspect ratio was derived as follows: 200 particles were randomly sampled from a scanning electron microscope photograph; for each of the particles, the long axis length and the short axis length were measured, and the ratio (A/B) of the long axis length (A) to the short axis length (B) was derived; and the average value over the values of the 200 particles was derived as the aspect ratio. The long axis length presented is an average value over the values obtained for the same set of 200 particles as used for the aspect ratio measurement.

The number of the constricted portions was derived as follows: 200 particles were randomly sampled from the scanning electron microscope photograph of a magnification of 100000; for each of the particles, the long axis length and the number of the constricted portions were measured; the number of the constricted portions was represented in terms of the number of the constricted portions per a length of 1 µm in the long axis direction, namely, as the number of the constrictions (unit: portions/µm) as shown in the formula presented below.

Number of constricted portions (portions/µm) = Sum (portions) of number of constricted portions/sum of the long axis lengths (µm)

**[Table 2]**

| | BET Specific Surface Area (m²/g) | Long Axis Length (µm) | Aspect Ratio | Constriction Degree (portions/ µm) |
|---|---|---|---|---|
| EXAMPLE 1 | 24.8 | 0.202 | 3.4 | 11.5 |
| EXAMPLE 2 | 23.5 | 0.200 | 3.0 | 12.9 |
| EXAMPLE 3 | 22.0 | 0.131 | 1.9 | 20.9 |
| EXAMPLE 4 | 28.1 | 0.253 | 4.2 | 9.2 |
| EXAMPLE 5 | 26.2 | 0.231 | 3.7 | 9.2 |
| EXAMPLE 6 | 28.8 | 0.250 | 4.3 | 6.6 |
| EXAMPLE 7 | 28.2 | 0.230 | 4.3 | 7.1 |
| EXAMPLE 8 | 26.3 | 0.297 | 3.3 | 12.3 |
| EXAMPLE 9 | 24.9 | - | 2.3 | - |
| COMPARATIVE EXAMPLE 1 | 36.5 | 0.370 | 7.3 | 0 |
| COMPARATIVE EXAMPLE 2 | 36.0 | 0.351 | 7.7 | 0 |

(Note) For Example 9, there is shown an average value over the whole particles, namely, the particles having no constricted portions on the particle surface and the particles having constricted portions on the particle surface.
Table 3 presented below shows the aspect ratio, the long axis length and the constriction degree for each of the particles having no constricted portions on the particle surface and the particles having constricted portions on the particle surface.

**[Table 3]**

| | Long Axis Length (µm) | Aspect Ratio | Constriction Degree (portions/µm) |
|---|---|---|---|
| Constricted portion-free particles | 0.07 | 1.3 | - |
| Constricted portion-containing particles | 0.13 | 2.5 | 10 |

The physical properties of the constricted portion-free particles and the constricted portion-containing particles in Table 3 are the average values obtained as follows: the constricted portion-free particles and the constricted portion-containing particles were visually, randomly sampled from the scanning electron microscope photograph; and average values were derived over 200 particles for each category of the particles.

### Examples 10 and 11 and Comparative Example 3

Each of the barium carbonate particle powders obtained in Example 3, Example 9 and Comparative Example 1 and a high-purity titanium dioxide (trade name: Chlors titanium oxide KA-10C, BET specific surface area: 9.2 m²/g, average particle size: 0.37 µm, manufactured by Titan Kogyo, Ltd.) were sufficiently mixed so as for the molar ratio Ti/Ba to be 1.006, by using a ball mill (zirconia beads of 0.5 mm in bead diameter) as a wet mixer, and thereafter the mixture was dried at 130°C for 2 hours and then ground. And the ground product was calcined at 900°C for 2 hours in air, cooled, and thereafter ground to yield a barium titanate sample.

The barium titanate samples thus obtained were subjected to an X-ray diffraction observation with Cu-Kα ray as radiation source, and in any of the barium titanate samples, no peaks of barium carbonate and titanium dioxide as the unreacted raw materials were able to be identified. Further, for the purpose of observing the effects of the impurities due to the zirconia beads used, the Zr atom content in each of the barium titanate samples was measured by ICP. Additionally, Table 4 also lists the BET specific surface areas and the average particle sizes obtained from the scanning electron microscopic observation.

**[Table 4]**

| | Type of BaCO₃ used | Average Particle Size (µm) | BET Specific Surface Area (m²/g) | Zr content (ppm) | Mixing time (hr) |
|---|---|---|---|---|---|
| EXAMPLE 10 | Example 3 | 0.21 | 4.71 | 99 | 7 |
| EXAMPLE 11 | Example 9 | 0.22 | 4.33 | 85 | 5 |
| COMPARATIVE EXAMPLE 3 | Comparative Example 1 | 0.21 | 4.06 | 720 | 24 |

As can be seen from the results shown in Table 4, in the barium titanate samples obtained by using the barium carbonate particle powders of the present invention, the incorporation of the impurities due to the mixing-grinding treatment was suppressed because the above-described barium carbonate particle powders were satisfactory in the dispersibility for titanium dioxide and hence no excessive mixing-grinding treatment was required even when the treatment of mixing with titanium dioxide was conducted to such conditions that no unreacted raw materials were found to remain in the produced barium titanate.

The rod-like or granular barium carbonate particle powder described above is small in aspect ratio, further contains such particles that have a novel particle shape having constricted portions on the particle surface, and is satisfactory in dispersibility, and hence can be used as the raw material for producing high-purity perovskite barium titanate in which the remaining of unreacted raw materials in the solid phase reaction and the incorporation of the impurities due to the mixing treatment are suppressed.

## Claims

1. A rod-like barium carbonate particle powder **characterized in that** the particle powder contains rod-like particles having two or more constricted portions on the particle surface and the aspect ratio of the rod-like particles is 1.5 to 4.5.

2. The rod-like barium carbonate particle powder according to claim 1, wherein the long axis length of the rod-like particles is 0.1 to 0.5 µm.

3. The rod-like barium carbonate particle powder according to claim 1 or 2, **characterized in that** the BET specific surface area of the rod-like particles is 15 m²/g or more.

4. The rod-like barium carbonate particle powder according to any one of claims 1 to 3, wherein the constricted portions are disposed in the direction perpendicular to or inclined from the long axis direction of the rod-like particles.

5. A granular barium carbonate particle powder **characterized in that** the particle powder contains granular particles having no constricted portions on the particle surface and granular particles each having two or more constricted portions on the particle surface and the aspect ratio of the granular particles is 1.3 to 3.0.

6. The granular barium carbonate particle powder according to claim 5, **characterized in that** the BET specific surface area of the granular particles is 15 m²/g or more.

7. A production method for producing a rod-like barium carbonate particle powder according to claim 1; the production method comprising heat treating at 50°C or higher an aqueous slurry containing an acicular barium carbonate particle powder obtained from a reaction in water medium between barium hydroxide and a carbonic acid source selected from carbon dioxide and a soluble carbonate in the presence of at least one or more particle growth suppressors selected from the group consisting of a polyhydric alcohol, pyrophosphoric acid, ascorbic acid, a carboxylic acid, a carboxylic acid salt, a polycarboxylic acid and a polycarboxylic acid salt.

8. The production method according to claim 7, **characterized in that** the aspect ratio of the acicular barium carbonate particle powder is 4.5 or more.

9. The production method according to claim 7, **characterized in that** the carbonic acid source is carbon dioxide.

10. A production method for producing a granular barium carbonate particle powder, the method comprising the method of claim 7, and further comprising:
applying a grinding treatment to the product obtained by heat treating at 50°C or higher said aqueous slurry containing said acicular barium carbonate particle powder.

11. A production method of perovskite barium titanate, **characterized in that** the barium carbonate particle powder according to any one of claims 1 to 6 and titanium dioxide are mixed together, and the obtained mixture is calcined.

12. The use of the barium carbonate particle powder according to any one of claims 1 to 6 as a barium source for the production of perovskite barium titanate.

## Patentansprüche

1. Pulver aus stäbchenförmigen Bariumcarbonatpartikeln, **dadurch gekennzeichnet, dass** das Partikelpulver stäbchenförmige Partikel mit zwei oder mehr verengten Teilbereichen auf der Partikeloberfläche enthält und dass das Längenverhältnis der stäbchenförmigen Partikel 1,5 zu 4,5 ist.

2. Pulver aus stäbchenförmigen Bariumcarbonatpartikeln nach Anspruch 1, wobei die Länge der Längsachse der stäbchenförmigen Partikel 0,1 bis 0,5 µm beträgt.

3. Pulver aus stäbchenförmigen Bariumcarbonatpartikeln nach Anspruch 1 oder 2, **dadurch gekennzeichnet dass** die BET innere Oberfläche der stäbchenförmigen Partikel 15 m²/g oder mehr ist.

4. Pulver aus stäbchenförmigen Bariumcarbonatpartikeln nach einem der Ansprüche 1 bis 3, wobei die verengten Teilbereiche in der Richtung senkrecht zu oder schräg zur Längsachsenrichtung der stäbchenförmigen Partikel angeordnet sind.

5. Granuläres Pulver aus Bariumcarbonatpartikeln, **dadurch gekennzeichnet, dass** das Partikelpulver granuläre Partikel ohne verengte Teilbereiche auf der Partikeloberfläche und granuläre Partikel mit jeweils zwei oder mehr verengten Teilbereichen auf der Partikeloberfläche enthält und dass das Längenverhältnis der stäbchenförmigen Partikel 1,3 zu 3,0 ist.

6. Granuläres Pulver aus Bariumcarbonatpartikeln nach Anspruch 5, **dadurch gekennzeichnet, dass** die BET innere Oberfläche der stäbchenförmigen Partikel 15 m²/g oder mehr ist.

7. Herstellungsverfahren zum Herstellen eines Pulvers aus stäbchenförmigen Bariumcarbonatpartikeln gemäß Anspruch 1; wobei das Herstellungsverfahren umfasst Hitzebehandlung einer wässrigen Aufschlämmung, die ein Pulver aus nadelförmigen Bariumcarbonatpartikeln, erhalten aus einer Reaktion zwischen Bariumhydroxid und einer Carbonsäurequelle ausgewählt aus Kohlendioxid und einem löslichen Carbonat in Gegenwart von mindestens einem Unterdrücker von Partikelwachstum ausgewählt aus der Gruppe bestehend aus einem mehrwertigen Alkohol, Pyrophosphorsäure, Ascorbinsäure, einer Carboxylsäure, einem Salz einer Carboxylsäure, einer Polycarboxylsäure und einem Salz einer Polycarboxylsäure, in wässrigem Medium enthält, bei 50°C oder höher.

8. Herstellungsverfahren nach Anspruch 7, **gekennzeichnet dadurch, dass** das Längenverhältnis des Pulvers aus nadelförmigen Bariumcarbonatpartikeln 4,5 oder mehr ist.

9. Herstellungsverfahren nach Anspruch 7, **dadurch gekennzeichnet, dass** die Carbonsäurequelle Kohledioxid ist.

10. Herstellungsverfahren zum Herstellen eines granulären Pulvers aus Bariumcarbonatpartikeln, umfassend das Verfahren gemäß Anspruch 7 und weiter umfassend: Unterziehen des Produkts erhalten durch Hitzebehandlung bei 50 °C oder höher einer Mahlbehandlung, wobei der wässrige Schlamm das Pulver aus nadelförmigen Bariumcarbonatpartikeln enthält.

11. Herstellungsverfahren für Perowskit-Bariumtitanat, **dadurch gekennzeichnet, dass** das Pulver aus Bariumcarbonatpartikeln gemäß einem der Ansprüche 1 bis 6 und Titandioxid zusammengemischt werden und dass die erhaltene Mischung kalziniert wird.

12. Verwendung des Pulvers aus Bariumcarbonatpartikeln gemäß einem der Ansprüche 1 bis 6 als Bariumquelle zur Herstellung von Perowskit-Bariumtitanat.

## Revendications

1. Poudre de particules de carbonate de baryum en bâtonnets, ladite poudre de particules étant **caractérisée en ce qu'**elle contient des particules en bâtonnets ayant deux ou plus de deux portions rétrécies sur la surface des particules, et le rapport d'allongement des particules en bâtonnets va de 1,5 à 4,5.

2. Poudre de particules de carbonate de baryum en bâtonnets suivant la revendication 1, dans laquelle la longueur du grand axe des particules en bâtonnet va de 0,1 à 0,5 µm.

3. Poudre de particules de carbonate de baryum en bâtonnets suivant la revendication 1 ou 2, caractérisée en que la surface spécifique BET des particules en bâtonnets est égale ou supérieure à 15 m²/g.

4. Poudre de particules de carbonate de baryum en bâtonnets suivant l'une quelconque des revendications 1 à 3, dans laquelle les portions rétrécies sont disposées dans la direction perpendiculaire à, ou inclinées par rapport à, la direction du grand axe des particules en bâtonnets.

5. Poudre de particules de carbonate de baryum granulaire, ladite poudre de particules étant **caractérisée en ce qu'**elle contient des particules granulaires n'ayant aucune portion rétrécie sur la surface des particules et des particules granulaires ayant chacune deux ou plus de deux portions rétrécies sur la surface des particules, et le rapport d'allongement des particules granulaires va de 1,3 à 3,0.

6. Poudre de particules de carbonate de baryum granulaire suivant la revendication 5, **caractérisée en ce que** la surface spécifique BET des particules granulaires est égale ou supérieure à 15 m²/g.

7. Procédé de production pour produire une poudre de particules de carbonate de baryum en bâtonnets suivant la revendication 1 ; le procédé de production comprenant le traitement thermique à une température égale ou supérieure à 50°C d'une suspension aqueuse contenant une poudre de particules de carbonate de baryum aciculaires obtenue par une réaction dans un milieu aqueux entre de l'hydroxyde de baryum et une source d'acide carbonique choisie entre le dioxyde de carbone et un carbonate soluble en présence d'au moins un ou plusieurs suppresseurs de croissance des particules choisis dans le groupe consistant en un alcool polyhydroxylique, l'acide pyrophosphorique, l'acide ascorbique, un acide carboxylique, un sel d'acide carboxylique, un acide polycarboxylique et un sel d'acide polycarboxylique.

8. Procédé de production suivant la revendication 7, **caractérisé en ce que** le rapport d'allongement de la poudre de particules de carbonate de baryum aciculaires est égal ou supérieur à 4,5.

9. Procédé de production suivant la revendication 7, **caractérisé en ce que** la source d'acide carbonique est le dioxyde de carbone.

10. Procédé de production pour produire une poudre de particules de carbonate de baryum granulaire, le procédé comprenant le procédé de la revendication 7, et comprenant en outre :
l'application d'un traitement de broyage au produit obtenu par traitement thermique à une température égale ou supérieure à 50°C de ladite suspension aqueuse contenant ladite poudre de particules de carbonate de baryum aciculaires.

11. Procédé de production d'un titanate de baryum du type pérovskite, **caractérisé en ce que** la poudre de particules de carbonate de baryum suivant l'une quelconque des revendications 1 à 6 et du dioxyde de titane sont mélangés ensemble, et le mélange obtenu est calciné.

12. Utilisation de la poudre de particules de carbonate de baryum suivant l'une quelconque des revendications 1 à 6, comme source de baryum pour la production de titanate de baryum du type pérovskite.
